# EUROPÄISCHE PATENTSCHRIFT

(11) **EP 1 419 910 B1**
(45) Veröffentlichungstag und Bekanntmachung des Hinweises auf die Patenterteilung: **30.04.2008**
(21) Anmeldenummer: 03019907.9
(22) Anmeldetag: 02.09.2003
(51) Int. Cl.: B60G 17/005, B60G 17/04, B60G 15/12, F16F 9/06

(54) **Hydropneumatische Federung**
Hydropneumatic suspension
Suspension hydropneumatique

(30) Priorität: 13.11.2002 DE 10252729
(43) Veröffentlichungstag der Anmeldung: 19.05.2004
(73) Patentinhaber: HYDAC TECHNOLOGY GMBH, 66280 Sulzbach/Saar (DE)
(72) Erfinder: Kühn, Michael, 23936 Wotenitz (DE)
(74) Vertreter: Bartels & Partner

(56) Entgegenhaltungen:
- DE-A1- 3 742 883
- DE-A1- 4 221 088
- DE-C1- 4 242 448
- US-A- 3 761 110
- US-A- 4 153 237
- PATENT ABSTRACTS OF JAPAN Bd. 1995, Nr. 03, 28. April 1995 (1995-04-28) & JP 06 340212 A (HITACHI CONSTR MACH CO LTD), 13. Dezember 1994 (1994-12-13)

## Beschreibung

Die Erfindung betrifft eine hydropneumatische Federung mit den Merkmalen des Oberbegriffes des Patentanspruches 1.

Hydropneumatische Federungen werden beispielsweise als Hinterachsfederungen bei Traktoren oder sonstigen Arbeitsmaschinen eingesetzt. Ist über das ansteuerbare Ventil eine fluidführende Verbindung zwischen Federungsspeicher und Federungszylinder hergestellt, insbesondere in Form eines üblichen Hydrospeichers bzw. Arbeitszylinders, der mit dem jeweiligen Radsatz des Traktors in Verbindung steht, wird die dahingehende Radachse für den jeweiligen Arbeitseinsatz entsprechend gefedert. Will man nun mit der Arbeitsmaschine, insbesondere in Form eines Traktors Arbeitsvorgänge durchführen, beispielsweise mit einer Pfluggerätschaft ein Feld pflügen, ist die Federung zu sperren, das heißt über das ansteuerbare Ventil wird die Verbindung zwischen Federungszylinder und Federungsspeicher unterbrochen. Dies hat nunmehr den Vorteil, dass sich nicht ungewollt die "Arbeitshöhe" des Pfluges oder einer anderen Arbeitsgerätschaft ändert, was den jeweils vorgesehenen Arbeitseinsatz beeinträchtigen könnte.

Die bekannten technischen Lösungen (beispielsweise DE-A-42 42 448) zum dahingehenden Stillsetzen der hydropneumatischen Federung setzen unter anderem eine rein elektrische Betätigung des ansteuerbaren Sperrventiles ein, und da dieses ansteuerbare Ventil im Hinblick auf die dann zu beherrschenden hohen Durchflußmengen recht groß aufbaut, sind wiederum große Betätigungskräfte zum Schalten des Ventils notwendig, was wiederum zu entsprechend großdimensionierten Schaltmagneten für das Ansteuern des Ventiles führt, die auch eine entsprechend hohe Leistungsaufnahme an elektrischem Strom aufweisen. Des weiteren ist bei Stillsetzen der hydropneumatischen Federung, bei der das ansteuerbare Ventil seine Sperrstellung einnimmt, das dahingehende Antriebskonzept starr ausgelegt und Einflüsse auf die Arbeitsgerätschaft, beispielsweise durch Bodenunebenheiten über die der Traktor oder die Arbeitsmaschine fährt, führen dazu, dass die dahingehenden Störeinflüsse an die Arbeitsgerätschaft wie einen Pflug weitergegeben werden, was den eigentlichen Pflugvorgang deutlich beeinträchtigen kann, wobei selbstredend das Fahrzeug jedenfalls steifer in seiner Fahrcharakteristik auszulegen ist als die Regelung des Pfluges, damit überhaupt sinnvoll ein Arbeitsvorgang wie das Pflügen möglich ist.

Durch die US-A-3 761 110 ist eine gattungsgemäße hydropneumatische Federung bekannt mit mindestens einem Federungszylinder und mit mindestens zwei Federungsspeichern, insbesondere Hydrospeicher, die mit dem einen Federungszylinder zusammenwirken sowie mit einem vorgesteuerten Ventil zum Freigeben oder Sperren einer fluidführenden Verbindung zwischen Federungszylinder und dem jeweils zuordenbaren Federungsspeicher, wobei das vorgesteuerte Ventil auf seiner Betätigungsseite ein mit einem Vorsteuerkolben versehenes, hydraulisch ansteuerbares Vorsteuerteil aufweist.

Bei der bekannten Lösung werden zum Einstellen verschiedener Feder-Dämpfungscharakteristika in Abhängigkeit von der Lastsituation am jeweiligen Federungszylinder des Fahrwerks mittels zweier verschiedener Reihen an Hydrospeichern mit unterschiedlich hohen Vorspannungsdrücken für jede Reihe, diese jeweils an den zuordenbaren Federungszylinder weitergegeben unter Einbezug eines ansteuerbaren Ventils, das in der Art einer zweistufig wirkenden Schalteinrichtung ausgebildet die jeweilige fluidführende Verbindung zwischen dem Federungszylinder und dem Hydrospeicher unterschiedlicher Druck-Vorspannung herstellt. Zur Ansteuerung der dahingehenden Schaltventileinrichtung dient ein Vorsteuerteil, das auf die Betätigungsseite des ansteuerbaren Schaltventils einwirkt, wofür dessen Vorsteuerkolben den Fluiddruck in der Art eines Meldekolbens zwischen Federungszylinder und jeweils zugeordnetem Federungsspeicher abgreift. Mit der bekannten Lösung ist nur innerhalb eines eng begrenzten Federkennlinien-Dämpfungsfeldes eine sinnfällige Ansteuerung des jeweiligen Federungszylinders des Fahrwerks möglich. Obwohl die Ansteuerung nur in einem begrenzten Rahmen erfolgt, sind für einen Niedrigdruck und einen Hochdruck, bezogen auf den Federungszylinder mindestens zwei Reihen mit mindestens einem Federungsspeicher notwendig, was entsprechend Bauraum benötigt und zu erhöhten Kosten führt.

Ausgehend von diesem Stand der Technik liegt der Erfindung die Aufgabe zugrunde, die bekannten Lösungen dahingehend weiter zu verbessern, dass eine kleinaufbauende und energetisch günstige Ventilsteuereinrichtung für hydropneumatische Federungen geschaffen ist und in Weitergestaltung der Erfindung es zu ermöglichen, auch bei unterschiedlichen Lasten an der jeweiligen Arbeitsgerätschaft der Arbeitsmaschine derart einen Lastausgleich im Betrieb zu schaffen, dass Störungen im Arbeitsablauf weitestgehend vermieden sind. Eine dahingehende Aufgabe löst eine hydropneumatische Federung mit den Merkmalen des Patentanspruches 1 in seiner Gesamtheit.

Dadurch, dass gemäß dem kennzeichnenden Teil des Patentanspruches 1 das vorgesteuerte Ventil ein Proportionalventil ist und dass eine hydraulische Ansteuereinrichtung den Fluiddruck zwischen dem Federungsspeicher und dem jeweils zugeordneten Federungszylinder abgreift und über ein Schalt- oder Proportionalventil auf die Betätigungsseite des vorgesteuerten Ventiles mit ihrem Vorsteuerteil weiterleitet, erlaubt das erfindungsgemäße hydraulische Ansteuerkonzept das Aufbringen großer Betätigungskräfte, die notwendig sind, um das ansteuerbare Ventil in der Art eines vorgesteuerten Ventiles mit seinen hohen Durchflußmengen sicher ansteuern zu können. Aufgrund des ausschließlich hydraulischen Ansteuerkonzepts kann auf einen entsprechend groß und kostenintensiv ausgelegten Schaltmagneten vollständig verzichtet werden, was insgesamt die erfindungsgemäße Lösung kleiner aufbauen und kostengünstiger werden lässt. Da ohnehin zur Realisierung der hydropneumatischen Federung ein Hydraulikmedium eingesetzt ist, braucht neben diesem nicht noch eine weitere Energieart (elektrischer Strom) eingesetzt werden, um eine dahingehende Federung sinnfällig zu betreiben, was wiederum die Herstellungs- und Wartungskosten reduziert.

Insbesondere ist es gegenüber dem Stand der Technik nach der US-A-3 761 110 mögl ich, aufgrund der Ausgestaltung des ansteuerbaren Ventils als Proportionalventil einen Öffnungsvorgang kontinuierlich vonstatten gehen zu lassen und es hat sich gezeigt, dass sich hierdurch im Gegensatz zu dem bekannten Zweistufen-Schaltventil Hemmungen während des Schaltens des Ventilkolbens für das vorgesteuerte Ventil vermeiden lassen. Des weiteren kann anstelle des Schaltventiles, das auf die Betätigungsseite des vorsteuerbaren Ventiles einwirkt ein Proportionalventil treten, mit dem dann ein besonders weiches Zuschalten des Federungsspeichers möglich ist.

Vorzugsweise ist dabei vorgesehen, dass die hydraulische Ansteuereinrichtung den Fluiddruck zwischen Federungsspeicher und jeweils zugeordnetem Federungszylinder abgreift und über ein Schaltventil auf die Betätigungsseite des derart vorgesteuerten Ventiles weiterleitet. Vorzugsweise erfolgt dabei des weiteren der Abgriff des Fluiddruckes für das Betätigen dieses vorgesteuerten Ventiles zwischen diesem und dem Federungsspeicher, so dass über den Federungsspeicher ein relativ hoher Betätigungsdruck zur Verfügung steht.

Sofern bei einer bevorzugten Ausführungsform der erfindungsgemäßen hydropneumatischen Federung zwischen Schaltventil und Betätigungsseite des vorgesteuerten Ventiles eine Drossel und im Nebenzweig zu dieser Drossel ein Rückschlagventil geschaltet ist, das federbelastet in Richtung der Betätigungsseite des ansteuerbaren Ventiles öffnet, ist sichergestellt, dass das vorgesteuerte Ventil nur langsam sich öffnen läßt und somit Druckdifferenzen zwischen dem jeweiligen Federungszylinder und dem zuordenbaren Federungsspeicher vermieden sind, so dass undefinierte Bewegungen des Federungszylinders beim beschriebenen Entsperren der Federung nicht auftreten können.

Bei einer weiteren besonders bevorzugten Ausführungsform der erfindungsgemäßen hydropneumatischen Federung ist in einem weiteren Nebenzweig zum vorgesteuerten Ventil zwischen Federungsspeicher und Federungszylinder eine weitere Drossel oder eine Blende geschaltet. Aufgrund dieser Drossel oder Blende kann ein langsamer Lastausgleich zwischen Federungsspeicher und Federungszylinder stattfinden, bei gesperrter hydropneumatischer Federung, so dass dann jedenfalls sichergestellt ist, dass das Fahrzeug mit seiner Federung in der Regelung steifer ausgelegt ist als der angehängte Pflug oder die sonstige Arbeitsgerätschaft.

Sollte es sich ergeben, dass die Zeit des langsamen Lastausgleiches nicht für einen vollständigen Lastausgleich ausreicht und soll die Federung zu ihrer Aktivierung entsperrt werden, wird durch das beschriebene gedrosselte Öffnen des vorgesteuerten Ventils ein dahingehender Lastausgleich erreicht und soll die Federung im Arbeitsbetrieb gesperrt werden, ist gemäß der erfinderischen Schaltung es möglich über ein sehr klein aufbauendes Vorsteuerventil aufgrund des bevorrateten Druckes im Federungsspeicher das vorgesteuerte Ventil über das hydraulische Medium zu sperren.

Alternativ zu der vorstehend beschriebenen Lösung kann auch vorgesehen sein, die zwischen Schaltventil und Betätigungsseite des ansteuerbaren Ventiles vorhandene Drossel entfallen zu lassen zusammen mit dem Rückschlagventil im Nebenzweig zu dieser Drossel. Anstelle dieser Schaltungsanordnung kann vielmehr zwischen einem Eingang des Schaltventiles und dem Tank ein Stromregelventil geschaltet sein und zwar vor dem Abzweig einer Verbindungsleitung, die an die Rückstellseite des Ventiles angeschlossen ist. Mit der dahingehenden Ausgestaltung lassen sich die entsprechend selben Wirkungen und Vorteile erzielen wie mit der ansonsten vorstehend beschriebenen hydraulischen Schaltung.

Weitere vorteilhafte Ausführungsformen sind Gegenstand der sonstigen Unteransprüche.

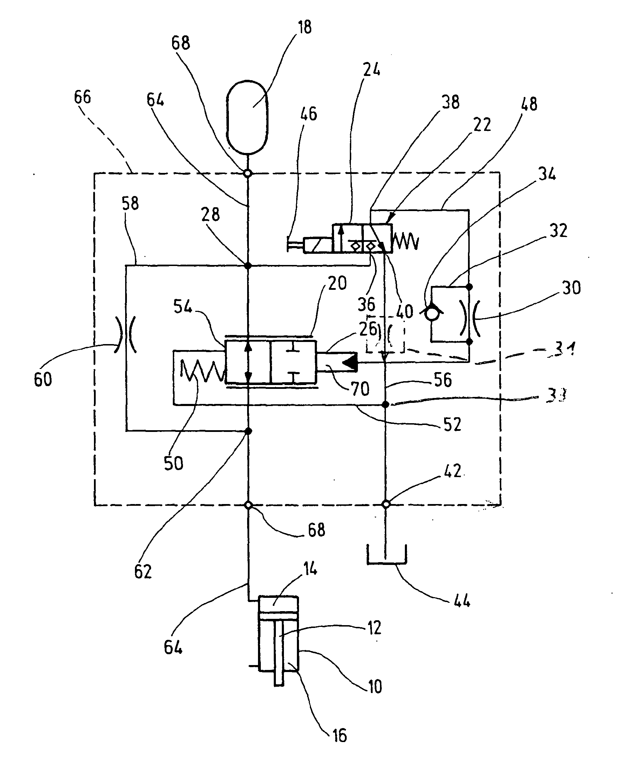

Im folgenden wird die erfindungsgemäße hydropneumatische Federung anhand eines Ausführungsbeispieles nach der Zeichnung näher erläutert. Dabei zeigt die einzige Zeichnung in prinzipieller Darstellung einen hydraulischen Schaltplan der hydropneumatischen Federung.

Die hydropneumatische Federung gemäß der Darstellung weist einen Federungszylinder 10 in der hierfür üblichen Bauart auf. Der Federungszylinder 10 ist mit einer Kolbenstangeneinheit 12 versehen und an dem freien Ende der Kolbenstange dieser Einheit ist eine Radachse eines entsprechenden Radsatzes (nicht dargestellt) angeordnet. Beim Hin- und Herbewegen der Kolbenstangeneinheit 12 innerhalb des Federungszylinders 10 wird in den beiden Arbeitsräumen 14, 16 auf übliche Art und Weise ein Hydraulikmedium ein- und ausgeschoben, so dass auf die dahingehenden Einzelheiten an dieser Stelle nicht mehr näher eingegangen wird.

Der dahingehende Federungszylinder 10 läßt sich, was noch näher beschrieben werden wird, in Wirkverbindung bringen mit einem Federungsspeicher 18 in Form eines üblichen Arbeits- oder Hydrospeichers, beispielsweise in Form eines Membran- oder Blasenspeichers, wobei eine nicht näher dargestellte Trenneinrichtung in Form einer Trennmembran oder Trennblase das Hydraulikmedium für die Federung von einem Gasvorrat im Speicher trennt, dessen Druckpolster die Federsteifigkeit für den jeweiligen Federungszylinder 10 mit bestimmt. Auch die dahingehende Anordnung ist dem Grunde nach für hydropneumatische Federungen üblich, so dass an dieser Stelle auf Einzelheiten in diesem Zusammenhang nicht näher eingegangen wird.

Festzuhalten bleibt aber jedenfalls, dass wie dargestellt ein Federungszylinder 10 einem Federungsspeicher 18 zuordenbar ist; es sind aber auch Ausgestaltungen denkbar, bei denen in mehrfacher Anordnung Federungszylinder 10 und Federungsspeicher 18 vorhanden sind und ein Federungsspeicher 18 kann auch mehrere Federungszylinder 10 entsprechend für deren Einfedervorgänge ansteuern. Zwischen dem Federungszylinder 10 und dem Federungsspeicher 18 ist ein vorgesteuertes Ventil 20 geschaltet, dass in der Darstellung nach der Figur in seiner Neutralstellung gezeigt ist, das heißt in seiner durchgeschalteten freigebenden Öffnungsstellung, bei der der Arbeitsraum 14 fluidführend mit der Fluidseite des Federungsspeichers 18 in Wirkverbindung steht und dergestalt die hydropneumatische Federung für den nicht näher dargestellten Radsatz bzw. die Radachse bildet.

Das vorgesteuerte Ventil 20, insbesondere in Form eines Proportionalventiles läßt sich mittels einer als Ganzes mit 22 bezeichneten hydraulischen Ansteuereinrichtung in die Schließstellung bringen, bei der die fluidführende Verbindung bezogen auf das vorgesteuerte Ventil 20 zwischen Federungszylinder 10 und Federungsspeicher 18 unterbrochen ist. Die genannte hydraulische Ansteuereinrichtung 22 greift den Fluiddruck zwischen Federungsspeicher 18 und dem jeweils zugeordneten Federungszylinder 10 ab und leitet diesen über ein Schaltventil 24 auf die Betätigungsseite 26 des vorgesteuerten Ventiles 20. Insbesondere folgt der beschriebene Abgriff des Fluiddruckes für das Betätigen des vorgesteuerten Ventiles 20 zwischen diesem und dem Federungsspeicher 18. Die dahingehende Abgriffstelle ist in der Figur mit 28 bezeichnet. Zwischen dem Schaltventil 24 in Form eines 3/2 Wege-Sitz-Ventiles üblicher Bauart und der Betätigungsseite 26 des vorgesteuerten Ventiles 20 ist eine Drossel 30 und im Nebenzweig 32 zu dieser Drossel 30 ein übliches Rückschlagventil 34 geschaltet, dass federbelastet in Richtung der Betätigungsseite 26 des vorgesteuerten Ventiles 20 öffnet.

Gemäß der Darstellung nach der Figur ist in der durchgeschalteten Freigabestellung des vorgesteuerten Ventiles 20 das Schaltventil 24 in der gezeigten Schaltstellung, bei der der Eingang 36 des Schaltventiles 24 fluidführend an die Abgriffstelle 28 angeschlossen ist und vom Ausgang 38 des Schaltventiles 24 abgesperrt. Der weitere Eingang 40 des Schaltventiles 24 ist fluidführend mit dem Tankanschluß 42 verbunden, der zum Tank 44 führt. Wird das Schaltventil 24 betätigt, beispielsweise über einen üblichen Handhebel 46 im Führerhaus der Arbeitsmaschine, wird das Schaltventil 24 durchgeschaltet und der Eingang 36 fluidführend mit dem Ausgang 38 verbunden und im übrigen der Tankanschluß 42 abgesperrt. In der federbelasteten Rückstelllage wie gezeigt, bei nicht betätigtem Handhebel 46, ist hingegen der weitere Eingang 40 fluidführend mit dem Ausgang 38 verbunden und somit besteht über den Tankanschluß 42 eine fluidführende Verbindung zwischen Tank 44 und einer Anschlußleitung 48 an die die Drossel 30 fluidführend angeschlossen ist.

Hinter der genannten Drossel 30 führt die Anschlußleitung 48 dann in fluidführender Verbindung zu der Betätigungsseite 26 des vorgesteuerten Ventiles 20. So lange die hydraulische Ansteuereinrichtung 22 nicht betätigt ist, gemäß der Darstellung nach der Figur, ist über die mechanische Rückstellfeder 50 das vorgesteuerte Ventil 20 in seiner gezeigten Offenstellung gehalten. Des weiteren besteht eine fluidführende Verbindung über die Verbindungsleitung 52 zwischen der Rückstellseite 54 des vorgesteuerten Ventiles 20, die auf der gegenüberliegenden Seite der Betätigungsseite 26 am Ventil 20 angeordnet ist und die in eine Leitung 56 zum Tankanschluß 42 mündet. Die dahingehende Leitung 56 ist darüber hinaus an den weiteren Eingang 40 des Schaltventiles 24 angeschlossen.

In einem weiteren Nebenzweig 58 ist eine weitere Drossel 60 oder eine in Abhängigkeit der Viskosität des Fluids ausgelegte Blende (nicht dargestellt) geschaltet. Der dahingehende weitere Nebenzweig 58 mündet mit seinem einen freien Ende in die Abgriffstelle 28 und mit dem anderen Ende in die Verbindungsstelle 62, die neben der Abgriffstelle 28 Teil der bestehenden Anschlußleitung 64 zwischen Federungszylinder 10 und Federungsspeicher 18 ist.

Die vorstehend beschriebenen Schaltkomponenten können in einem Sperrblock 66 zusammengefasst sein, der in der Figur strichliniert wiedergegeben ist. Der dahingehende Sperrblock kann in der Art eines Bau- oder Nachrüstsatzes auch später bei bereits vorhandenen hydropneumatischen Federungen, zu deren Verbesserung zum Einsatz kommen. Die beiden Anschlüsse 68 für den Federungszylinder 10 sowie für den Federungsspeicher 18 und auch der Tankanschluß 42 des Sperrblockes 66 lassen sich normieren, so dass auch in bestehende Anlagegruppen ein Einbau des Sperrblockes 66 als möglich erscheint. Die Betätigungsseite 26 weist, vorzugsweise ein hydraulisches Vorsteuerteil 70 auf, wobei dessen Vorsteuerkolben, vorzugsweise zusammen mit Ventilteilen des ansteuerbaren Ventiles 20, als Schieber ausgebildet ist, der sowohl zur Betätigungsseite 26 als auch zur Rückstellseite 54 über nicht näher dargestellte Dichteinrichtungen abgedichtet ist.

Des besseren Verständnisses wegen wird nunmehr der Sperrblock 66 für die hydropneumatische Federung einer Arbeitsmaschine, insbesondere für eine Hinterachsfederung eines Traktors (nicht dargestellt) in seiner Funktion näher erläutert. Der Sperrblock 66 setzt insbesondere das vorgesteuerte 2/2 Wegeventil als ansteuerbares Ventil 20 ein, zum Blockieren der hydropneumatischen Federung bestehend aus dem jeweiligen Federungszylinder 10 und dem jeweils zuordenbaren Federungsspeicher 18. Als Vorsteuerdruck zum Ansteuern des Ventiles 20 dient dabei der vorhandene Druck im Federungsspeicher 18 in Form eines üblichen Hydrospeichers. Der Sperrblock 66 ist darüber hinaus charakterisiert, dass ein langsamer Abbau von Druckdifferenzen zwischen Federungszylinder 10 und Federungsspeicher 18 möglich ist, um dergestalt undefinierte Bewegungen des Federungszylinders 10 beim Entsperren der Federung über das ansteuerbare Ventil 20 zu vermeiden, sofern dieses in Richtung seiner in der Figur gezeigten freigebenden Öffnungsstellung bewegt wird.

In der in der Figur gezeigten geöffneten Stellung des ansteuerbaren Ventiles 20 ist der Federungszylinder 10 mit dem Federungsspeicher 18 fluidführend verbunden und dergestalt die hydropneumatische Federung eingeschaltet. In der nicht gezeigten gesperrten Stellung ist das Schaltventil 24 in Form des 3/2 Wege-Sitz-Ventiles über den Handhebel 46 oder eine sonstige Handsteuerung oder einen ansteuerbaren Elektromagneten betätigt und dergestalt ist der Federungsspeicher 18 fluidführend mit dem Vorsteuerteil 70 des ansteuerbaren Ventiles 20 verbunden und aufgrund des Arbeitsdruckes ist dergestalt dieses Ventil 20 geschlossen. Da das ansteuerbare Ventil 20 in der Art eines Proportionalventiles ausgebildet ist, geht der Öffnungsvorgang kontinuierlich vonstatten. Bei dem Schließvorgang des Ventiles 20 wird die Fluidmenge über die Verbindungsleitung 52 von der Rückstellseite 54 in Richtung des Tankanschlusses 42 in den Tank 44 ausgeschoben. Dergestalt lassen sich Hemmungen während des Schaltens des Ventilkolbens für das Ventil 20 vermeiden und der Schließvorgang geht ungeregelt und ungebremst vonstatten.

In der gesperrten, nicht gezeigten Stellung des Ventils 20 bleiben über die Drossel 60 oder über eine nicht näher dargestellte Blende, die alternativ zu der Drossel diese mit vorgebbarem Querschnitt ersetzen kann, der Federungszylinder 10 mit dem Federungsspeicher 18 fluidführend verbunden. Dadurch können Druckdifferenzen zwischen Hydrospeicher 18 und Zylinder 10 durch Laständerungen (Beladen/Entladen) auch im gesperrten Zustand langsam ausgeglichen werden und undefinierte Bewegungen der Federung bei Entsperren des Ventiles 20 in Richtung seiner Öffnungs- oder Freigabestellung sind verhindert. Der Zweig über die Drossel 60 ist optional und kann auch entfallen.

Zusätzlich oder alternativ kann die Vorsteuerleitung in Form der Anschlußleitung 48, die das 3/2 Wege-Sitz-Ventil 24 mit der Kolbenfläche des Vorsteuerteiles 70 des Ventiles 20 verbindet, mit einer Drossel 30 und in deren Nebenzweig 32 mit dem Rückschlagventil 34 derart versehen sein, dass in Richtung der Öffnungsstellung das Rückschlagventil 34 sperrt und über die Drossel 30 wird das ausgeschobene Fluid seitens des vorgesteuerten Ventiles 20 abgebaut, so dass das Ventil 20 langsam öffnet und die bereits erwähnten Druckdifferenzen gleichfalls langsam abgebaut werden.

Findet die dahingehende hydropneumatische Federung ihren Einsatz bei Traktoren, die als Arbeitsgerätschaften, Pfluggeräte oder dergleichen bewegen und entstehen hierbei durch den Arbeitseinsatz unterschiedliche Lasten, kann über die Drossel 60 ein langsamer Lastausgleich zwischen Federungsspeicher 18 und Federungszylinder 10 stattfinden. Reicht diese Zeit des langsamen Lastausgleiches nicht für einen vollständigen Lastausgleich aus und soll die Federung entsperrt werden, wird durch das gedrosselte Öffnen des vorgesteuerten Ventiles 20 über die weitere Drossel 30 der dahingehende Lastausgleich erreicht. Für die Sperrung der Federung ist bei der erfindungsgemäßen hydraulischen Schaltung nur ein kleines Vorsteuerventil 24 zu betätigen und aufgrund des vorherrschenden Druckes im Federungsspeicher 18 wird das Ventil 20 geschlossen und die beschriebene Federung gesperrt. Bei der dahingehend beschriebenen Anordnung ist jedenfalls sichergestellt, dass das Fahrzeug im Betrieb steifer ausgelegt ist als die Regelung des Pfluges, so dass die dahingehende Feldarbeit nicht beeinträchtigt ist. Obwohl das vorgesteuerte Ventil 20 klein aufbaut und keine Zusatzenergien benötigt, lassen sich die für eine Federung notwendigen hohen Durchflußraten zwischen Federungszylinder 10 und Federungsspeicher 18 über das Ventil 20 ohne weiteres erreichen.

Alternativ zu der vorgestellten hydropneumatischen Federung kann es auch vorgesehen sein, die Drossel 30 mit Rückschlagventil 34 in der Leitung 48 vollständig entfallen zu lassen und statt dessen ein Stromregelventil 31 zwischen einem Eingang 40 des Schaltventiles 24 und dem Tank 44 zu schalten, und zwar vor dem Abzweig 33 der Verbindungsleitung 52, die an die Rückstellseite 54 des Ventiles 20 angeschlossen ist. Die dahingehende alternative Ausführungsform ist in der einzigen Figur in einem strichliniert umrissenen Kästchen gezeigt.

## Patentansprüche

1. Hydropneumatische Federung mit mindestens einem Federungszylinder (10) und mit mindestens einem Federungsspeicher (18), insbesondere Hydrospeicher und mit einem vorgesteuerten Ventil (20) zum Freigeben oder Sperren einer fluidführenden Verbindung (Anschlußleitung 64) zwischen Federungszylinder (10) und Federungsspeicher (18), wobei das vorgesteuerte Ventil (20) auf seiner Betätigungsseite (26) ein mit einem Vorsteuerkolben versehenes, hydraulisch ansteuerbares Vorsteuerteil (70) aufweist, **dadurch gekennzeichnet, dass** das Ventil (20) ein Proportionalventil ist und dass eine hydraulische Ansteuereinrichtung (22) den Fluiddruck zwischen dem Federungsspeicher (18) und dem jeweils zugeordneten Federungszylinder (10) abgreift und über ein Schalt (24)- oder Proportionalventil auf die Betätigungsseite (26) des vorgesteuerten Ventiles (20) mit ihrem Vorsteuerteil (70) weiterleitet.

2. Hydropneumatische Federung nach Anspruch 1, **dadurch gekennzeichnet, dass** der Abgriff des Fluiddruckes für das Betätigen des vorgesteuerten Ventiles (20) zwischen diesem und dem Federungsspeicher (18) abgreifbar ist.

3. Hydropneumatische Federung nach Anspruch 1 oder 2, **dadurch gekennzeichnet, dass** zwischen Schaltventil (24) und Betätigungsseite (26) des vorgesteuerten Ventiles (20) eine Drossel (30) und im Nebenzweig (32) zu dieser Drossel (30) ein Rückschlagventil (34) geschaltet ist, das federbelastet in Richtung der Betätigungsseite (26) des vorgesteuerten Ventiles (20) öffnet.

4. Hydropneumatische Federung nach einem der Ansprüche 1 bis 3, **dadurch gekennzeichnet, daß** zwischen einem Eingang (40) des Schaltventils (24) und dem Tank (44) ein Stromregelventil (31) geschaltet ist und zwar vor dem Abzweig (33) einer Verbindungsleitung (52), die an der Rückstellseite (54) des Ventils (20) angeschlossen ist.

5. Hydropneumatische Federung nach einem der Ansprüche 1 bis 4, **dadurch gekennzeichnet, dass** in einem weiteren Nebenzweig (58) zum vorgesteuerten Ventil (20) zwischen Federungsspeicher (18) und Federungszylinder (10) eine weitere Drossel (60) oder eine Blende geschaltet ist.

6. Hydropneumatische Federung nach einem der Ansprüche 1 bis 5, **dadurch gekennzeichnet, dass** das vorgesteuerte Ventil (20) über eine Rückstellfeder (50) an ihrer Rückstellseite (54) in ihre Offenstellung als Neutralstellung geschaltet ist und dass eine fluidführende Verbindung (Verbindungsleitung 52) zwischen der Rückstellseite (54) und einem Tankanschluß (42) besteht.

7. Hydropneumatische Federung nach einem der Ansprüche 1 bis 6, **dadurch gekennzeichnet, dass** das vorgesteuerte Ventil (20) als Proportionalventil ein 2/2 Wege-Ventil ist, und dass das Schaltventil (24) ein 3/2 Wege-Sitz-Ventil ist.

8. Hydropneumatische Federung nach Anspruch 6 oder 7, **dadurch gekennzeichnet, dass** das Schaltventil (24) von Hand betätigbar ist und in der unbetätigten Neutralstellung eine fluidführende Verbindung (Anschlußleitung 48) zwischen dem Tankanschluß (42) und der Betätigungsseite (26) des vorgesteuerten Ventiles (20) herstellt.

9. Hydropneumatische Federung nach einem der Ansprüche 1 bis 8, **dadurch gekennzeichnet, dass** der Vorsteuerkolben des Vorsteuerteils (70) zusammen mit Ventilteilen des derart einstellbaren Ventiles (20) als Schieber ausgebildet ist, der zur Betätigungsseite (26) und zur Rückstellseite (54) abgedichtet ist.

## Claims

1. Hydro pneumatic suspension with at least one suspension cylinder (10), and with at least one suspension store (18), in particular a hydro store, and with a pre-controlled valve (20) for unlocking or locking a fluid conveying connection (connection line 64) between the suspension cylinder (10) and the suspension store (18), whereby the pre-controlled valve (20) comprises a hydraulically controllable pre-control part (70) equipped with a pre-control piston on its activating side (26), **characterised in that** the valve (20) is a proportional valve, and **in that** a hydraulic control means (22) records the fluid pressure between the suspension store (18) and the relevant associated suspension cylinder (10) and transmits the same to the activating side (26) of the pre-controlled valve (20) with its pre-control part (70) via a switching (24) or proportional valve.

2. Hydro pneumatic suspension according to Claim 1, **characterised in that** the recording of the fluid pressure serving for activating the pre-controlled valve (20) can be recorded between the same and the suspension store (18).

3. Hydro pneumatic suspension according to Claim 1 or 2, **characterised in that** a throttle (30) is switched between the switching valve (24) and the activating side (26) of the pre-controlled valve, and by a non-return valve (34) in the by-pass line (32) of this throttle (30), which opens the pre-controlled valve (20) in the direction of the activating side (26).

4. Hydro pneumatic suspension according to one of the Claims 1 to 3, **characterised in that** a flow control valve (31) is switched between an input (40) of the switching valve (24) and the tank (44), namely prior to the by-pass line (33) of the connection line (52) connected with the returning side (54) of the valve (20).

5. Hydro pneumatic suspension according to one of the Claims 1 to 4, **characterised in that** a further throttle (60) or a baffle is switched in a further by-pass line (58) of the pre-controlled valve (20) between the suspension store (18) and the suspension cylinder (10).

6. Hydro pneumatic suspension according to one of the Claims 1 to 5, **characterised in that** the pre-controlled valve (20) is switched into its open position as the neutral position by means of a returning spring (50) on its returning side (54), and **in that** a fluid conveying connection (connection line 52) exists between the returning side (54) and a tank connection (42).

7. Hydro pneumatic suspension according to one of the Claims 1 to 6, **characterised in that** the pre-controlled valve (20) is a proportional valve of the type of a 2/2-way valve, and **in that** the switching valve (24) is a 3/2-way seat valve.

8. Hydro pneumatic suspension according to Claim 6 or 7, **characterised in that** the switching valve (24) can be manually activated and creates a fluid conveying connection (connection line 48) between the tank connection (42) and the activating side (26) of the pre-controlled valve (20) in the non-activated neutral position.

9. Hydro pneumatic suspension according to one of the Claims 1 to 8, **characterised in that** the pre-control piston of the pre-control part (70) is formed as a flap together with the valve parts of the valve (20) that is adjustable in this way, the same being sealed on the activating side (26) and on the returning side (54).

## Revendications

1. Suspension hydropneumatique, comprenant au moins un cylindre (10) de suspension et au moins un accumulateur (18) de suspension, notamment un accumulateur hydraulique, et comprenant un distributeur (20) piloté pour autoriser ou interdire une liaison fluidique (conduite 64 de raccordement) entre le cylindre (10) de suspension et l'accumulateur (18) de suspension, sachant que le distributeur (20) piloté comporte sur son côté (26) d'actionnement un élément (70) de pilotage pouvant être asservi hydrauliquement et pourvu d'un piston de pilotage, **caractérisée en ce que** le distributeur (20) est un distributeur proportionnel et **en ce qu'**un dispositif (22) d'asservissement hydraulique prélève la pression de fluide entre l'accumulateur (18) de suspension et le cylindre (10) de suspension respectivement associé, et la transmet par l'intermédiaire d'un distributeur (24) de commutation ou d'un distributeur proportionnel au côté (26) d'actionnement du distributeur (20) piloté, pourvu de son élément (70) de pilotage.

2. Suspension hydropneumatique suivant la revendication 1, **caractérisée en ce que** le prélèvement de la pression de fluide pour l'actionnement du distributeur (20) piloté peut s'effectuer entre ce dernier et l'accumulateur (18) de suspension.

3. Suspension hydropneumatique suivant la revendication 1 ou 2, **caractérisée en ce qu'**un étranglement (30) est intercalé entre le distributeur (24) de commutation et le côté (26) d'actionnement du distributeur (20) piloté et un clapet (34) anti-retour est intercalé dans la conduite (32) dérivée menant à cet étranglement (30), clapet qui, en étant sollicité par ressort, s'ouvre en direction du côté (26) d'actionnement du distributeur (20) piloté.

4. Suspension hydropneumatique suivant l'une des revendications 1 à 3, **caractérisée en ce qu'**un régulateur (31) de débit est intercalé entre une entrée (40) du distributeur (24) de commutation et le réservoir (44), et ce avant le point (33) de branchement d'une conduite (52) de liaison qui est raccordée au côté (54) de rappel du distributeur (20).

5. Suspension hydropneumatique suivant l'une des revendications 1 à 4, **caractérisée en ce qu'**un autre étranglement (60) ou un réducteur est intercalé entre l'accumulateur (18) de suspension et le cylindre (10) de suspension dans une autre conduite (58) dérivée menant au distributeur (20) piloté.

6. Suspension hydropneumatique suivant l'une des revendications 1 à 5, **caractérisée en ce que** le distributeur (20) piloté est, au moyen d'un ressort (50) de rappel sur son côté (54) de rappel, commuté dans sa position ouverte en tant que position neutre, et **en ce qu'**il existe une liaison fluidique (conduite 52 de liaison) entre le côté (54) de rappel et un branchement (42) de réservoir.

7. Suspension hydropneumatique suivant l'une des revendications 1 à 6, **caractérisée en ce que** le distributeur (20) piloté sous forme de distributeur proportionnel est un distributeur 2/2 voies, et **en ce que** le distributeur (24) de commutation est un distributeur à siège 3/2 voies.

8. Suspension hydropneumatique suivant la revendication 6 ou 7, **caractérisée en ce que** le distributeur (24) de commutation peut être actionné à la main et réalise, dans la position neutre non actionnée, une liaison fluidique (conduite 48 de raccordement) entre le branchement (42) de réservoir et le côté (26) d'actionnement du distributeur (20) piloté.

9. Suspension hydropneumatique suivant l'une des revendications 1 à 8, **caractérisée en ce que** le piston de pilotage de l'élément (70) de pilotage est réalisé, conjointement avec les éléments distributeurs du distributeur (20) ainsi réglable, sous forme de tiroir qui est étanché vers le côté (26) d'actionnement et vers le côté (54) de rappel.
